# EUROPEAN PATENT SPECIFICATION

(11) **EP 1 683 659 B1**
(45) Date of publication and mention of the grant of the patent: **05.03.2008**
(21) Application number: 06000665.7
(22) Date of filing: 13.01.2006
(51) Int. Cl.: B60D 1/46, B60D 1/07

(54) **Hitch for tow vehicles**
Anhängerkupplung
Attelage pour véhicules

(30) Priority: 25.01.2005 GB 0501498
(43) Date of publication of application: 26.07.2006
(73) Proprietor: AGCO GmbH, 87616 Marktoberdorf (DE)
(72) Inventor: Gottlieb, Wolfe, 87616 Marktoberdorf (DE)
(74) Representative: Morrall, Roger

(56) References cited:
- DE-C1- 10 118 862
- US-A- 3 922 006
- US-A1- 2004 155 430

## Description

The invention relates to a hitch for tow vehicles, in particular agricultural tractors, comprising two guide cheeks attached to the vehicle with lateral spacing for a height-adjustable drawbar coupling and a horizontal carrier plate held detachably on the lower end area of the guide cheeks for a coupling element to provide a connection to an attached tool.

For connection of a towed working tool with an agricultural tractor, coupling elements in various designs are available, known under the terms "tow ball", "pintel pin" and "clevis pin" coupling. Usually not all these designs are used on a particular agricultural tractor, but depending on the main areas of use only one or two. Thus for example in Germany alternate use of a tow ball with a clevis pin is normal, whereas in France mainly a clevis pin and a pintel pin are used. A hitch which facilitates the change from one design to the other is disclosed in DE 101 18 862 C1. The carrier plate here can be inserted detachably in opposing horizontal guide grooves of the guide cheeks and locked in relation to these by vertical socket pins. After removing the socket pins and releasing further means for play-free fixing of the carrier plate, the carrier plate with a coupling element arranged thereon can be replaced with a carrier plate with a different coupling element. The known hitch must therefore have a carrier plate with one of these coupling elements for each coupling element design which may be required. For a particular use therefore the drawbar coupling must be fitted with a carrier plate carrying the coupling element required. This however brings problems if the tractor is to be used for successive towing of working tools with different coupling designs and the tools are changed at locations other than where the carrier plate with the required coupling element is stored. In particular this is often the case for vehicles of contract hire companies covering a large territory.

The object of the invention is to enlarge the area of application of a hitch of the type described initially.

This object is achieved by providing on the carrier plate of two different coupling elements, the carrier plate being arranged to be fixed on the guide cheeks in two alternative attachment positions, so that by appropriate choice of the attachment position of the carrier plate either coupling element can be brought selectively into an active coupling position.

A tractor equipped in this way thus constantly carries two designs of coupling elements, the carrier plate being selected from the existing stock of carrier plates according to the probable requirements before the start of travel. In many cases this helps avoid time losses which could occur because of incorrect coupling elements. To accommodate the known designs of coupling elements in the proposed manner on the carrier plates, three of these are required where on the first carrier plate a "clevis pin" coupling and "tow ball" are provided, on the second carrier plate a "clevis pin" coupling and "pintel pin" coupling are provided, and on the third carrier plate a "pintel pin" coupling and "tow ball" are provided. Since in most areas of application normally only two of the said coupling element designs will be used, the number of carrier plates required can be restricted to two. These can be selected so that the coupling element design mainly used in the current area of the application is present on each carrier plate.

To achieve a favourable transfer of the forces occurring from towing into the guide cheeks, the carrier plate in its side areas can be connected with the guide cheeks via socket pins extending in the vehicle longitudinal direction, with its side areas in form fitting contact with the guide cheeks in the vehicle longitudinal direction. Forces in the vehicle longitudinal direction occurring in use are therefore not transferred via the socket pins but from the carrier plate directly to the guide cheeks via the form fitting contact. These socket pins are subjected merely to the far lower top-mount forces of the working tool. Further refined, the side areas of the carrier plate can be designed in a fork-like configuration to form shackles which surround the guide cheeks at the front and rear and limit the maximum mobility of the carrier plate in the vehicle longitudinal direction to a low amount. This makes the coupling device insensitive to impacts and practically wear-free.

In a further configuration of the invention the side areas of the carrier plate holding the socket pins lie above a centre area of the carrier plate which carries the coupling elements. For a prespecified height of the carrier plate above ground, the guide cheeks can end at a greater height above ground (i.e. the guide checks can be shorter vertically) so that the ground clearance in this area is enlarged. This effect can easily be achieved if the side areas of the carrier plate are angled upwards.

The invention is now described in more detail below with reference to drawings of a hitch. These show:
- Fig. 1: a hitch with a carrier plate for a ball coupling and a swivel drawbar, where the tow ball is in the working position,
- Fig. 2: the hitch according to Fig. 1, where the clevis pin is in the working position, and
- Fig. 3: a hitch with a carrier plate for a pintel pin and a clevis pin, where the pintel pin is in the working position.

The figures show the back of a tractor with a hitch. The rear wall of the rear axle marked 1 can be seen, from which protrudes centrally a power take-off shaft 2 serving to drive attached working tools and covered by a protective plate 3. On both sides of the power take-off shaft 2, attached to the rear wall 1 by means of bolts 4 are two vertical guide cheeks 5 of the hitch, of which the right-hand one viewed in the vehicle longitudinal direction is not shown for greater clarity. The guide cheeks 5 have opposing guide grooves 6 for a height-adjustable drawbar coupling not shown.

In the lower end area on the guide cheeks 5 are formed front eyes 7 and rear eyes 8 with through bores running in the longitudinal direction of the tractor. The through bores serve to hold two socket pins 9 with which is held on to the guide cheeks 5 a carrier plate 10 for two coupling elements 12 and 13. The carrier plate 10 has in the centre a flat horizontal area 14 on which are arranged the coupling elements 12, 13, and right and left side areas 15 which are angled up at an angle of around 30° and designed as forks forming front and rear shackles 16 through which the socket pins 9 extend and are held in position by linch pins 11. The angled sides 15 cause the longitudinal bores in the shackles 16 to lie in a plane above the centre area 14 of the carrier plate, so that the guide cheeks 5 can be designed correspondingly shorter. The shackles 16 have the greatest possible distance apart in order to keep low their loads from traction forces acting oblique to the vehicle longitudinal direction

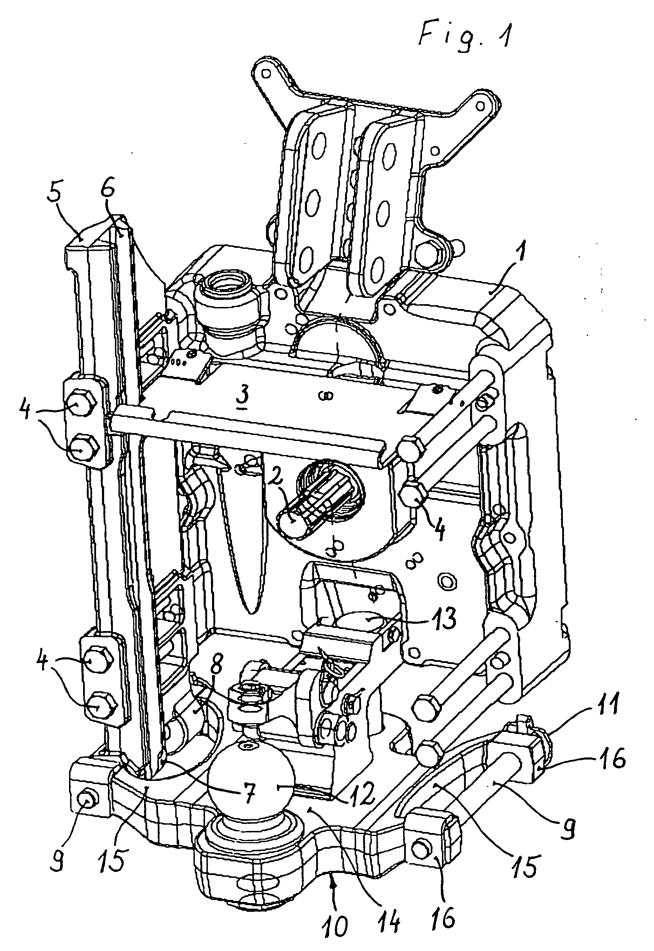

The coupling elements, known in themselves, are a ball coupling 12 and a clevis type coupling 13 which lie behind each other in the vehicle longitudinal centre plane marked by the power take-off shaft 2. In Fig. 1 the ball coupling 12 in relation to the vehicle is behind the clevis coupling 13 and hence in a position in which a working tool can be attached.

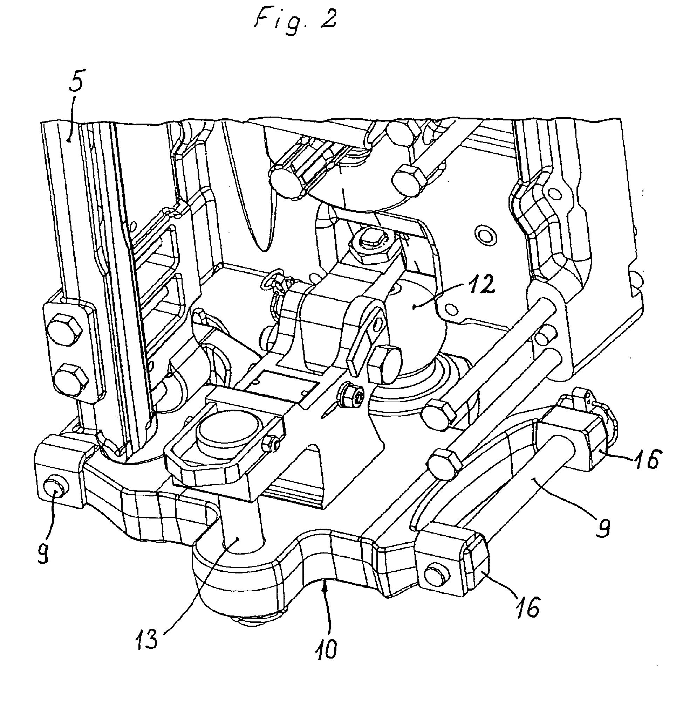

The shackles 16 surround the eyes 7, 8 of the guide cheeks front and rear with a slight play whereby the carrier plate 10 is connected form-fit with the guide cheeks 5 in the vehicle longitudinal direction. Furthermore the shackles 16 are arranged symmetrical to the coupling elements 12, 13 so that after removal of the socket pins 9, by simple rotation of the carrier plate 10 and reinsertion of the socket pins 9, the other coupling element - in this case the clevis pin 13 - can be brought into the coupling position as shown in Fig. 2.

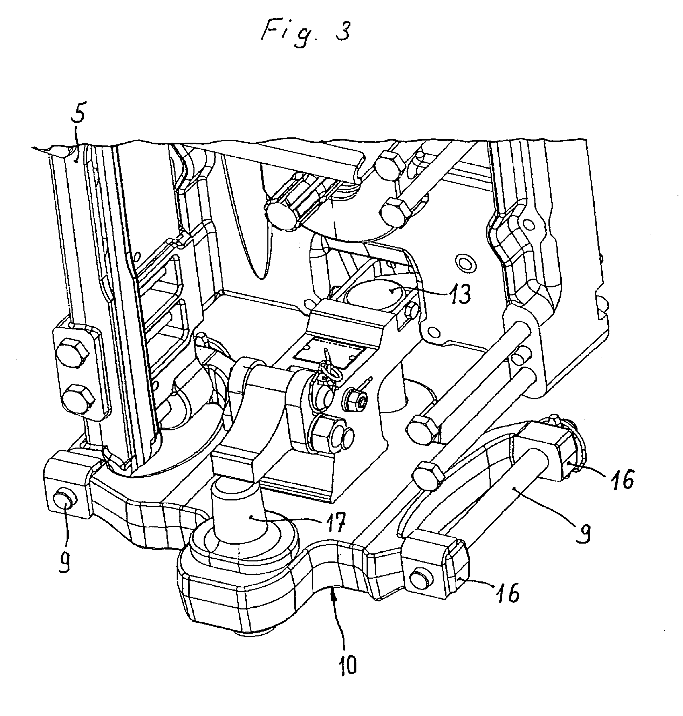

Fig. 3 shows a carrier plate 10 on which is attached a clevis pin coupling 13 and a pintel pin type coupling 17. Similarly a carrier plate 10 can be fitted with a ball coupling 12 and a pintle pin coupling 17. Evidently also other types of coupling element can be used without departing from the scope of the invention.

## Claims

1. A hitch for tow vehicles, in particular agricultural tractors, comprising two guide cheeks (5) attached to the vehicle with lateral spacing for a height-adjustable drawbar coupling, and a horizontal carrier plate (10) held detachably on the lower end area of the guide cheeks for a coupling element creating the connection with an attached working tool, **characterised in that** arranged on the carrier plate (10) are two different coupling elements (12, 13; 12, 17; 13, 17) and that the carrier plate (10) can be fixed on the guide cheeks (5) in two alternative attachment positions, so that by appropriate choice of the attachment position of the carrier plate (10) either coupling element can be brought selectively into an active coupling position.

2. A hitch according to Claim 1, **characterised in that** side areas (15) of the carrier plate (10) are each attached to on respective guide cheek (5) via a socket pin (9) extending in the vehicle longitudinal direction.

3. A hitch according to Claim 2, **characterised in that** the side areas of the carrier plate (10) are established as a form-fit on the guide cheeks (5) in the vehicle longitudinal direction.

4. A hitch according to Claim 3, **characterised in that** each side area (15) of the carrier plate (10) is designed as forks forming shackles (16) which surround the associated guide cheek (5) at the front and back.

5. A hitch according to one or more of Claims 1 to 4, **characterised in that** the side areas (15) of the carrier plate (10) holding the socket pins (9) lie above a centre area (14) of the carrier plate which carries the coupling elements (12, 13; 12, 17; 13, 17).

6. A hitch according to Claim 5, **characterised in that** the side areas (15) of the carrier plate (10) are angled upwards.

## Patentansprüche

1. Kupplung für Zugfahrzeuge, insbesondere landwirtschaftliche Schlepper, mit zwei Führungswangen (5), die zur Aufnahme einer höhenverstellbaren Zugstangenkupplung mit seitlichem Abstand voneinander an dem Fahrzeug angeordnet sind, mit einer horizontal angeordneten Trägerplatte (10), die lösbar im unteren Endbereich der Führungswangen angeordnet ist und ein Kupplungselement für die Verbindung zu einem angesetzten Arbeitswerkzeug trägt, **dadurch gekennzeichnet, dass** auf der Trägerplatte (10) zwei unterschiedliche Kupplungselemente (12, 13; 12, 17; 13, 17) vorgesehen sind, und dass die Trägerplatte (10) an den Führungswangen (5) in zwei alternativen Ansetzpositionen befestigbar ist, so dass durch geeignete Auswahl der Ansetzposition der Trägerplatte (10) jedes der Kupplungselemente in die aktive Kupplungsposition gebracht werden kann.

2. Eine Kupplung nach Anspruch 1, **dadurch gekennzeichnet, dass** die seitlichen Bereiche (15) der Trägerplatte (10) jeweils an der betreffenden Führungswange (5) über einen sich in Fahrzeuglängsrichtung erstreckenden Haltebolzen (9) angesetzt sind.

3. Eine Kupplung nach Anspruch 2, **dadurch gekennzeichnet, dass** die seitlichen Bereiche der Trägerplatte (10) in Fahrzeuglängsrichtung formschlüssig an den Führungswangen (5) angreifen.

4. Eine Kupplung nach Anspruch 3, **dadurch gekennzeichnet, dass** jeder seitliche Bereich (15) der Trägerplatte (10) mit eine Gabel bildenden Schäkeln (16) gestaltet ist, die die zugehörige Führungswange (5) vorn und hinten umgeben.

5. Eine Kupplung nach einem oder mehreren der Ansprüche 1 bis 4, **dadurch gekennzeichnet, dass** die seitlichen Bereiche (15) der Trägerplatte (10), die die Haltebolzen (9) aufnehmen, oberhalb eines horizontalen Bereichs (14) der Trägerplatte (10) mit den Kupplungselementen (12, 13; 12, 17; 13, 17) angeordnet sind.

6. Eine Kupplung nach Anspruch 5, **dadurch gekennzeichnet, dass** die seitlichen Bereiche (15) der Trägerplatte (10) nach oben abgewinkelt sind.

## Revendications

1. Attelage pour véhicule de remorquage, en particulier pour tracteurs agricoles, comprenant deux joues de guidage (5) attachées au véhicule avec un espacement latéral pour un couplage par barre de traction ajustable en hauteur, et une plaque porteuse horizontale (10) tenue de manière amovible sur la zone extrémale basse des joues de guidage pour un élément de couplage créant une connexion avec un cutil de travail attaché, **caractérisé en ce que** sont agencés sur la plaque porteuse (10) deux éléments de couplage différents (12, 13 ; 12, 17 ; 13, 17) et **en ce que** la plaque porteuse (10) peut être fixée sur les joues de guidage (5) dans deux positions de fixation alternatives, de manière que par un choix approprié de la position de fixation de la plaque porteuse (10) l'un ou l'autre élément de couplage peut être mis sélectivement dans une position active de couplage.

2. Attelage selon la revendication 1, **caractérisé en ce que** les zones latérales (15) de la plaque porteuse (10) sont chacune attachées à une joue de guidage respective (5) au moyen d'un axe débrochable (9) s'étendant dans la direction longitudinale du véhicule.

3. Attelage selon la revendication 2, **caractérisé en ce que** les zones latérales de la plaque porteuse (10) sont ont des formes adaptées aux joues de guidages (5) dans la direction longitudinale du véhicule.

4. Attelage selon la revendication 3, **caractérisé en ce que** chaque zone latérale (15) de la plaque porteuse (10) est conçu comme un étrier formant une chape (16) qui entoure la joue de guidage associée (5) à l'avant et à l'arrière.

5. Attelage selon l'une quelconque des revendications 1 à 4, **caractérisé en ce que** les zones latérales (15) de la plaque porteuse (10) maintenant les axes débrochables (9) sont situées au-dessus d'une zone centrale (14) de la plaque porteuse qui porte les éléments de couplage (12, 13 ; 12, 17 ; 13, 17).

6. Attelage selon la revendication 5, **caractérisé en ce que** les zones latérales (15) de la plaque porteuse (10) obliquent vers le haut.
